# EUROPEAN PATENT SPECIFICATION

(11) **EP 1 533 861 B1**
(45) Date of publication and mention of the grant of the patent: **09.05.2007**
(21) Application number: 03380267.9
(22) Date of filing: 19.11.2003
(51) Int. Cl.: H01M 10/12, H01M 2/16

(54) **High power lead-acid battery with enhanced cycle life**
Hochleistungsbleiakkumulator mit verlängerter Lebensdauer
Batterie de plomb-acide de grande puissance avec augmentation de durée de cycles

(43) Date of publication of application: 25.05.2005
(73) Proprietor: SOCIEDAD ESPANOLA DEL ACUMULADOR TUDOR, S.A., 19200 Azuqueca (Guadalajara) (ES)
(72) Inventor: Soria Garcia-Ramos, Ma Luisa, 28033 Madrid (ES); Valenciano Martinez, Jesus, 28801 Alcala de Henares Madrid (ES); Trinidad Lopez, Francisco, 28804 Alcala de Henares (ES)
(74) Representative: Elzaburu Marquez, Alberto

(56) References cited:
- US-A- 4 606 982
- US-A1- 2001 038 946
- PATENT ABSTRACTS OF JAPAN vol. 0062, no. 11 (E-137), 23 October 1982 (1982-10-23) & JP 57 115762 A (NIHON DENCHI KK), 19 July 1982 (1982-07-19)
- PATENT ABSTRACTS OF JAPAN vol. 0091, no. 10 (E-314), 15 May 1985 (1985-05-15) & JP 60 001757 A (NIHON DENCHI KK), 7 January 1985 (1985-01-07)

## Description

### Field of the Invention:

The invention refers to a process of manufacturing valve-regulated high power lead-acid batteries with enhanced cycle life, as well as a battery manufactured utilizing this process and the use of said battery for high power applications.

### Background of the invention:

Since their invention in the 1970's valve-regulated lead-acid batteries with electrolyte absorbed in the glass microfibre separator have undergone constant development, aimed at improving reliability throughout their useful life. Batteries of this type differ from the conventional "flooded" kind on not having free electrolyte, inasmuch as the latter is embedded in a non-woven glass microfibre material acting as separator preventing physical contact between the positive and negative plates.

Valve-regulated lead-acid batteries have notable advantages over conventional flooded batteries due to (i) the absence of maintenance, (ii) greater cranking power, due to a lower electrical resistance of the material used as separator whose high porosity facilitates movement of the fluids and, therefore, uniform distribution of the electrolyte and (iii) better performance in deep discharge cycles due to the internal compression of the group of plates.

However, the glass microfibre material does not allow control of the oxygen transport speed during overcharge nor the gas recombination process which, on being exothermal, could bring about failure of the battery due to thermal runaway. Furthermore, due to its low mechanical resistance, problems of breakage of material could occur during the process of assembling elements, and short circuits can also occur during battery life due to perforation of the separator.
The conventional method of manufacturing valve-regulated lead-acid batteries with glass microfibre separator consists of assembling the groups of plates, once these are cured and dried, alternating a separator layer with the positive and negative plates, respectively. The separator can be arranged either in U-shape, enveloping the individual plates, or else in zig-zag the length of the entire group. The intrinsic characteristics of the glass microfibre material (porosity in excess of 90%) allow assembly of the groups of plates in the battery to be achieved with a certain degree of compression, which has been shown as necessary to assure the life of the battery in deep cycle life conditions. In practice it is difficult to achieve under dryness a degree of compression in stacked groups higher than 20%. However, during filling of the battery the wet separator loses resilience and hence the pressure diminishes, exercised by this on the positive active material which, throughout battery life, prevents loss of capacity through softening.

Numerous suggestions have been made to partially solve this problem.

Uba and Nelson's patents US 4.637.966 and US 4.648.177 describe a valve-regulated lead-acid element with recombination of gases which utilizes microfine glass fibre separators in which the element is manufactured assembling plates containing lead alternated with sheets of the said separator, assembling groups of spiral wound plates and inserting these groups of plates into the container such that plates and separator are mutually compressed. However, in said documents values of the compression reached are not given, nor those problems mentioned arising out of loss of compression of the separator during battery life.

Tanaka and Kakizaki's Patent US 5.075.184 teaches that, to avoid reduction of the service life in valve-regulated lead-acid batteries, it is necessary to compensate as much as possible the reduction in the thickness of the separator caused by the impregnation with the electrolyte by increasing the compression force applied on the group of plates contained in the battery container. For this purpose Tanaka and Kakizaki describe the use of a separator comprising at least two layers of pressed fibres, both glass fibre layers having a different average fibre size.

Rao's Patent US 6.406.813, assigned to GNB Technologies, Inc. likewise acknowledges the problem caused by the loss of an appropriate compression level in valve-regulated lead-acid elements, specifying that, to maintain satisfactory performance, it is necessary to maintain an intimate contact between plates and separators by means of a compression of, at least, around 20% to 25% with respect to the thickness of the non-compressed separator. In said document the means are not indicated whereby this degree of compression is achieved, but only the properties the separator should have to provide satisfactory performance.

Pearson's patent application PCT WO 81/01076 once more mentions the importance of maintaining intimate contact between plates and separators in valve-regulated lead-acid batteries. The solution provided by Pearson consists of compressing the elements before their insertion into the battery container, achieving a 2-30% decrease, preferably up to 5-15%, in the thickness of the separator material. In the only example supplied a compression of 10% of the separator is cited.

International Publication PCT WO 98/12759 describes a microfibre separator comprised by several layers of non-woven materials with different density, tensile strength and resilience values, such that the separator is capable of compressing and expanding, adapting itself to the changes in volume occurring in the active material during the charge and discharge reactions of the active materials of the battery. The compressions of the separator achieved, as described using this method, are from 10% to 20% under a charge of 1.5 psi.

JP 47115762 discloses a process to manufacture plates for pasted type lead batteries comprising the step of coating the plate face with a fibreglass material and then pressing it with a roller.

US 4,606,982, issued to Nelson and Juergens, discloses again a general process for the manufacturing of lead-acid battery plates comprising the step of coating the plate face with a fibreglass material and then pressing it with a roller.

Lastly, Edward's Patent US 4.603.093 and Arias' Patent US 6.618.641 describe valve-regulated lead-acid batteries with bipolar configuration and plates arranged horizontally inside the battery container. Although acknowledging the importance of maintaining the compression of the separator inside the groups, the manner of maintaining this compression is by the use of mechanical external pressure means.

### Summary of the invention:

The problem to be solved by the present invention is to improve the endurance of valve-regulated lead-acid batteries, at the same time increasing their cranking power.

The solution is based on providing a process for manufacturing valve-regulated lead-acid batteries comprising applying a non-woven glass microfibre material, on the wet plates following the process of pasting the active material on the grids, as well as carrying out a compression of the plate or groups of plates on different stages throughout manufacture of the battery, the first of these, and the most important, being a process of calendering by means of rollers to which the wet plates, recently pasted and coated with the said non-woven material are subjected, to obtain a determined thickness. By means of the process of the invention a compression of the separator is obtained, said separator comprising said non-woven glass microfibre material optionally together with other layers of other materials, being very high, up to 50% with respect to the thickness of the uncompressed separator, which value is very much higher than that achieved in conventional processes. This high value is achieved, in large part, thanks to the first compression stage (the calendering) being performed on plates with a non-woven glass microfibre material which becomes wet as a result of the water contained in the active material recently pasted on the grids, inasmuch as the compressibility of said material under dryness is lower and would require pressures not easily attainable on an industrial scale.

The plates are next stacked during the curing stage, such that the process also, optionally, comprises applying a substantially perpendicular force on the surface of the plates, e.g., by placing a weight on them, whereby an additional reduction of 10-15% in the thickness is brought about, the groups lastly being inserted in the container under pressure, achieving an additional reduction of around 10%-15%.

Accordingly, a first aspect of the invention refers to a process of manufacturing valve-regulated lead-acid batteries, comprising pasting lead alloy grids with a paste comprising lead oxide, sulphuric acid and water, thereby forming plates which when recently pasted are wet, characterised in that said process comprises the steps of:
a) applying at least one layer of non-woven glass microfibre material on at least one face of at least one of said recently wet pasted plates, and
b) wet calendering said plates, having at least one layer of a non-woven glass microfibre material, with rollers to obtain a final predetermined plate thickness,
whereby a reduction of thickness is obtained in said layers of non-woven glass microfibre material of 20 to 40% with respect to their initial nominal value.

In a second aspect the invention refers to a valve-regulated lead-acid battery, manufactured using the process mentioned above.

In a third aspect the invention refers to the use of the mentioned valve-regulated lead-acid battery in high power applications.

A battery such as that provided in the present invention has high endurance, owing to the high compression of the separator achieved, which prevents, or at least hinders, the active material shedding from the plates during the cycle life of the battery.

Another advantage provided by the present invention is that, as a result of the high compression, the real thickness of the separator is substantially reduced, signifying less electrical resistance during operation of the battery, and therefore greater cranking power.

An additional advantage of the present invention is that the composition of the separator represents a compromise between its mechanical properties, such that it can be used without breakage problems in continuous plate manufacturing processes, and its acid absorption and retention properties, assuring proper operation of the battery.

### Detailed description of the invention:

In the process of manufacturing valve-regulated lead-acid batteries of the invention, up to four stages have been defined wherein a reduction can be made in the thickness of the glass microfibre separator by applying external compression forces:
- During the process of pasting the grids, at least one layer of high-porosity non-woven glass microfibre material is applied to at least one face of the wet plates and the plates are next calendered with rollers to adjust the final thickness to a predetermined value, depending on the thickness of the plate, the initial thickness of the glass microfibre material and the final degree of compression desired. By this process a reduction in the thickness of the glass microfibre material is obtained, of 20 to 40% with respect to the initial nominal values of the same.
- During the curing and drying process of the stacked plates a substantially perpendicular force can be applied to the surface of the plate, e.g., by placing a weight on them, giving rise to an additional reduction in the thickness in the order of 10-15%, with respect to the value prior to the application of such force.
- Once the group of plates is prepared, a substantially perpendicular external force can be applied to the surface on the end plates, whose value depends on the size of the plate and on the final thickness of the group, depending on the number of plates it contains as well as their thickness, further advisable in order to facilitate insertion of the group into the container. These steps bring about an additional reduction of 10-15% in the thickness of the glass microfibre material with respect to the value prior to the application of the cited force.
- In the case of battery cells with cylindrical design, during the process of winding the wet plates, before the curing process, it is possible to apply a tangential force on the surface of the plates, whose value can vary depending on the degree of compression desired for the separator.

Naturally, each one of these stages is independent of the rest, meaning it is possible to apply just one of them, or two, or three, or any combination of them.

The non-woven glass microfibre material applied on the plates is similar to that used at the present time in manufacturing lead-acid batteries with internal recombination of gases. This material has high porosity, between 90 and 96%, preferably from 92 to 94%, calculated measuring the thickness of material under a force of 10 kPa, and a variable thickness, depending on the thickness of the plates and the application, being between 0.2 and 1.0 mm (measured under a pressure of 10 kPa), preferably between 0.2 and 0.6 mm in thickness, and an average pore size of 3 to 7 µm. Furthermore, its composition represents a compromise between its mechanical properties, for its use without problems in continuous plate manufacturing processes, and its acid absorption and retention properties to assure proper operation of the battery. Hence, this material comprises at least 70% of glass fibre of a diameter less than 1 µm which favours absorption and capillary performance of the material, the preferable content being from 75 to 85%. The content in thick glass fibres, between 1 and 12 µm in diameter, is 0-30%, preferably 10-15% and it is also possible to use polymer fibres of similar diameter, preferably polyester fibres, in a ratio between 0 and 30% to improve the mechanical properties of the material, without dramatically affecting its acid absorption properties.

The process described can be applied to batteries with different types of separators and with different configurations, depending on the applications. Hence, in a preferred embodiment of the invention, during the process of manufacturing the plates, two glass microfibre materials, with substantially similar characteristics, are applied to each side of the plates, thus simplifying manufacture.

In a second embodiment of the invention it is possible to use two layers of glass microfibre material with different characteristics in contact with the positive and negative plates, since the size and thickness of the fibres determine the availability of acid in the high rate discharges and during the life of the battery, as well as the characteristics of capillarity and acid absorption which favour the ionic and gas diffusion processes during operation of the battery. In this way it is possible, varying the configuration of the layers of non-woven material, to optimise the electrical performance of the battery depending on the use to which it is destined.

In another embodiment of the invention, an additional layer of glass microfibre material can likewise be included as additional component of the separator, with a thickness between 0.5 and 2.5 mm, measured under 10 kPa pressure, depending upon the application in view and with similar characteristics to those of the products existing on the market as separators for valve-regulated lead-acid batteries or else similar to the ones described above.

At the present time the automobile and industrial market demand is for more and more power. Hence, it is necessary to use plates that are thinner and thinner in order to obtain a larger working surface, as well as to simultaneously reduce the thickness of the separator. This fact can lead to the formation of micro short circuits due hydration and subsequently during battery life so that, in an additional embodiment of the present invention, and in order to increase battery reliability and life, as additional component of the separator a layer of high density polyethylene microporous material is provided which, owing to its smaller pore size, hinders the formation of short circuits during the battery filling process or during battery life and regulates the transfer of oxygen in overcharge to the negative plate during battery life, preventing its premature failure through thermal runaway due to the excessive heat produced when the internal recombination reaction of gases reaches high proportions.

Said high density polyethylene strip has a composition similar to that of the separators used in the flooded batteries for vehicle cranking applications, but is differentiated therefrom by the absence of ribs in both faces, in this case being unnecessary, because the electrolyte is to be found absorbed in the glass microfibre material, as well as in its lesser thickness (0.13-0.20 mm) and greater porosity, in excess of 75%, to reduce the electrical resistance of the material. The polyethylene strip is characterised as well by its reduced pore size, preferably between 0.10 and 0.20 µm, its high initial and subsequent wettability throughout the lifetime of the batteries, due to including silica in its composition, in a content of around 40% to 70% and its excellent mechanical properties.

Besides the conventional designs of prismatic batteries, in which the plates are to be found stacked and connected parallely in each one of the elements, it is also possible to apply the invention to designs of plates in cylindrical configuration, which allows an additional mechanical compression of the glass microfibre separator during the process of winding the plates.

The advantages of the present invention are clearly shown in the examples of application indicated below:

### EXAMPLES

The positive plates are prepared applying, on lead grids of 0.9-1.0 mm thickness, the active material comprised by a mixture of lead oxide and basic lead sulphates, in line with the conventional technology of components mixing (lead oxide, sulphuric acid and water) and under those work conditions and in those ratios marked by the conventional processes of manufacturing pasted plates for lead-acid batteries. Immediately after pasting, on each face of the plate a layer of non-woven glass microfibre material is applied having the characteristics indicated in Table 1 and the plates are next wet calendered by two steel rollers adjusted to the final plate thickness, which is set in accordance with the amount of active material applied, density of the same, initial thickness of the microfibre material and degree of compression desired therein. In each case the degree of compression is indicated as the reduction of thickness of the glass microfibre material with respect to the value prior to bringing the external compression force to bear. The stacked plates are next placed in a curing chamber in which the standard curing process is carried out under controlled moisture and temperature conditions. The stacking conditions of the plates can give rise to an additional compression of the separator in those cases and under those conditions indicated in said Table 1.

The negative plates are prepared in a similar way, utilizing lead alloy grids of 0.7-0.8 mm thickness. Once cured and dried the plates are stacked alternating negative and positive plates with an additional separator layer: a high-density polyethylene membrane with 78% porosity and average pore size of 0.16 µm, or an additional layer of glass microfibre material with 92% porosity and 0.80 mm thickness, as indicated in Table 1 below. The plates of the same polarity are casted and the group finally subjected to an additional pressure by means of a suitable tool to reduce the total thickness of the same and to facilitate its insertion into the polypropylene container. Once connection in series of the different elements is made, closure of the battery, filling with electrolyte and the initial charge or formation follow.

The nominal capacity of the batteries is 15Ah. To establish the effect of each variable in the performance of the battery in high power discharges and in deep cycling, following measurement of the capacity a discharge has been carried out at 3000 W down to 9V, whose duration is likewise indicated in Table 1, and the batteries have been tested in life cycles at 60% depth of discharge, effecting a capacity control every 50 cycles. The failure criterion of the battery is that of not reaching 80% of the nominal capacity in the control discharge.

**Table 1**

| | | Group 1 | Group 2 | Group 3 | Group 4 | Group 5 |
|---|---|---|---|---|---|---|
| Glass microfibre material on positive plate | Porosity (%) | 93 | 93 | 93 | 93 | 93 |
| | Average pore size (µm) | 5 | 5 | 5 | 5 | 3 |
| Glass microfibre material on negative plate | Porosity (%) | 93 | 93 | 93 | 93 | 93 |
| | Average pore size (µm) | 5 | 5 | 5 | 5 | 5 |
| Compression Calendered (%) | | 20 | 30 | 20 | 30 | 30 |
| Compression Stacked (%) | | 5-10 | 5-10 | 5-10 | 5-10 | 5-10 |
| Additional separator layer | | Glass microfibre | Glass microfibre | Polyethylene membrane | Polyethylene membrane | Polyethylene membrane |
| Compression in assembly (%) | | 5 | 10 | 5 | 10 | 10 |
| Duration discharge 3000 W (s) | | 43 | 48 | 43 | 47 | 50 |
| Cycle life (60% Depth of Discharge) | | 300 | 350 | 300 | 400 | 450 |

As can be seen, on increasing the compression in calendering and in assembling performance improves in high-power discharges and in deep discharge cycles. Furthermore, use of the membrane also increases battery life, especially when two materials with different characteristics are utilized next to each plate.

## Claims

1. Process of manufacturing valve-regulated lead-acid batteries, comprising pasting lead alloy grids with a paste comprised by lead oxide, sulphuric acid and water thereby forming plates which, when recently pasted, are wet, **characterised in that** said process comprises the steps of:
a) applying at least one layer of a non-woven glass microfibre material to at least one face of at least one of said recently pasted wet plates and
b) wet calendering said plates having at least one layer of a non-woven glass microfibre material with rollers to obtain a reduction in the thickness of said at least one layer of non-woven glass microfibre material from 20 to 40% with respect to the initial nominal value.

2. Process of manufacturing valve-regulated lead-acid batteries according to claim 1, further comprising applying a compression step during at least one of the processes of curing and drying of the plates, which gives rise to an additional reduction in the thickness of said layers of non-woven glass microfibre material of about 10 to 15% with respect to the value prior to said compression step.

3. Process of manufacturing valve-regulated lead-acid batteries according to claims 1 or 2, further comprising applying an additional compression step of the group of plates prior to its insertion into the battery container, which gives rise to an additional reduction in the thickness of said layers of non-woven glass microfibre material of about 10-15% with respect to the value prior to said additional compression step.

4. Process of manufacturing batteries according to any of claims 1 to 3, wherein the non-woven glass microfibre material has a porosity between 90 and 96%, calculated measuring the thickness of the material under a pressure of 10 kPa, and a thickness between 0.2 and 1.0 mm, measured under a pressure of 10 kPa.

5. Process of manufacturing batteries according to any of the preceding claims, wherein the non-woven glass microfibre material comprises at least 70% glass fibres less than 1 µm in diameter, 0-30% of glass fibres between 1 and 12 µm in diameter and 0-30% of polymer fibres.

6. Process of manufacturing batteries according to any of the preceding claims, wherein the two layers of non-woven glass microfibre material are of similar composition as far as distribution of fibre size and thickness is concerned.

7. Process of manufacturing batteries according to claims 1 to 5, wherein the two layers of non-woven glass microfibre material are of a different composition as far as distribution of fibre size and thickness is concerned.

8. Process of manufacturing batteries according to any of the preceding claims, further comprising adding between the plates at least one additional layer of glass microfibre material having a thickness of 0.5 to 2.5 mm, measured under a pressure of 10 kPa.

9. Process of manufacturing batteries according to any of the preceding claims, further comprising adding between the plates at least one additional layer of high density microporous polyethylene material comprising silica in a concentration between 40 and 70%.

10. Process of manufacturing batteries according to claim 9, wherein the layer of high density microporous polyethylene material has a porosity in excess of 75%, a thickness of 0.13 to 0.20 mm and an average pore size between 0.10 and 0.20 µm.

## Patentansprüche

1. Verfahren zur Herstellung ventilregulierter Blei-Säure-Batterien, das aufweist: Pastieren von Bleilegierungsgittern mit einer Paste, die aus Bleioxid, Schwefelsäure und Wasser besteht, wodurch Platten gebildet werden, die feucht sind, wenn sie vor kurzem pastiert worden sind, **dadurch gekennzeichnet, daß** das Verfahren die Schritte aufweist:
a) Aufbringen mindestens einer Schicht eines Glasmikrofaser-Vliesmaterials auf zumindest eine Fläche mindestens einer der vor kurzem pastierten feuchten Platten und
b) Naßkalandrieren der Platten mit mindestens einer Schicht eines Glasmikrofaser-Vliesmaterials mittels Walzen, um eine Reduzierung der Dicke der mindestens einen Glasmikrofaser-Vliesmaterialschicht um 20 bis 40% in bezug auf den anfänglichen Nominalwert zu erreichen.

2. Verfahren zur Herstellung ventilregulierter Blei-Säure-Batterien nach Anspruch 1, das ferner aufweist: Anwenden eines Kompressionsschritts während mindestens eines der Härtungs- und Trocknungsprozesse der Platten, was eine zusätzliche Reduzierung der Dicke der Glasmikrofaser-Vliesmaterialschichten um etwa 10 bis 15% in bezug auf den Wert vor dem Kompressionsschritt bewirkt.

3. Verfahren zur Herstellung ventilregulierter Blei-Säure-Batterien nach Anspruch 1 oder 2, das ferner aufweist: Anwenden eines zusätzlichen Kompressionsschritts der Gruppe von Platten vor ihrem Einsetzen in den Batteriekasten, was eine zusätzliche Reduzierung der Dicke der Glasmikrofaser-Vliesmaterialschichten um etwa 10 bis 15% in bezug auf den Wert vor dem zusätzlichen Kompressionsschritt bewirkt.

4. Verfahren zur Herstellung von Batterien nach einem der Ansprüche 1 bis 3, wobei das Glasmikrofaser-Vliesmaterial eine Porosität zwischen 90 und 96%, berechnet nach Messung der Dicke des Materials unter einem Druck von 10 kPa, und eine Dicke zwischen 0,2 und 1,0 mm, gemessen unter einem Druck von 10 kPa, hat.

5. Verfahren zur Herstellung von Batterien nach einem der vorstehenden Ansprüche, wobei das Glasmikrofaser-Vliesmaterial mindestens 70% Glasfasern mit einem Durchmesser kleiner als 1 µm, 0 bis 30% Glasfasern mit einem Durchmesser zwischen 1 und 12 µm und 0 bis 30% Polymerfasern aufweist.

6. Verfahren zur Herstellung von Batterien nach einem der vorhergehenden Ansprüche, wobei die beiden Glasmikrofaser-Vliesmaterialschichten die gleiche Zusammensetzung haben, was die Verteilung der Fasergröße und -dicke betrifft.

7. Verfahren zur Herstellung von Batterien nach den Ansprüchen 1 bis 5, wobei die beiden Glasmikrofaser-Vliesmaterialschichten eine unterschiedliche Zusammensetzung haben, was die Verteilung der Fasergröße und -dicke betrifft.

8. Verfahren zur Herstellung von Batterien nach einem der vorhergehenden Ansprüche, das ferner aufweist: Einbringen mindestens einer zusätzlichen Glasmikrofaser-Vliesmaterialschicht mit einer Dicke von 0,5 bis 2,5 mm, gemessen unter einem Druck von 10 kPa, zwischen die Platten.

9. Verfahren zur Herstellung von Batterien nach einem der vorhergehenden Ansprüche, das ferner aufweist: Einbringen mindestens einer zusätzlichen Schicht aus mikroporösem Polyethylenmaterial hoher Dichte mit Siliziumdioxid in einer Konzentration zwischen 40 und 70% zwischen die Platten.

10. Verfahren zur Herstellung von Batterien nach Anspruch 9, wobei die Schicht aus mikroporösem Polyethylenmaterial hoher Dichte eine Porosität von mehr als 75%, eine Dicke von 0,13 bis 0,20 mm und eine mittlere Porengröße zwischen 0,10 und 0,20 µm hat.

## Revendications

1. Procédé de fabrication d'accumulateurs au plomb-acide à régulation par soupape, comprenant le collage de grilles en alliage de plomb avec une colle composée d'oxyde de plomb, d'acide sulfurique et d'eau formant ainsi des plaques qui, lorsqu'elles viennent d'être collées, sont humides, **caractérisé en ce que** ledit processus comprend les étapes consistant à :
a) appliquer au moins une couche d'un matériau non tissé à micro-fibres de verre sur au moins une face d'au moins une desdites plaques humides qui viennent d'être collées, et
b) calandrer par voir humide lesdites plaques ayant au moins une couche d'un matériau non tissé à micro-fibres de verre par des rouleaux pour obtenir une réduction de l'épaisseur de ladite au moins une couche de matériau non tissé à microfibres de verre de 20 à 40 % par rapport à la valeur nominale initiale.

2. Procédé de fabrication d'accumulateurs au plomb-acide à régulation par soupape selon la revendication 1, comprenant en outre l'application d'une étape de compression pendant au moins un des processus de durcissement et de séchage des plaques, qui donne lieu à une réduction supplémentaire de l'épaisseur desdites couches de matériau non tissé à microfibres de verre d'environ 10 à 15 % par rapport à la valeur avant ladite étape de compression.

3. Procédé de fabrication d'accumulateurs au plomb-acide à régulation par soupape selon la revendication 1 ou 2, comprenant en outre l'application d'une étape de compression supplémentaire du groupe de plaques avant son insertion dans le bac d'accumulateurs, qui donne lieu à une réduction supplémentaire de l'épaisseur desdites couches de matériau non tissé à fibres de verre d'environ 10 à 15 % par rapport à la valeur avant ladite étape de compression supplémentaire.

4. Procédé de fabrication d'accumulateurs selon l'une quelconque des revendications 1 à 3, dans lequel le matériau non tissé à microfibres de verre a une porosité comprise entre 90 et 96 %, calculée en mesurant l'épaisseur du matériau sous une pression de 10 kPa, et une épaisseur entre 0,2 et 1,0 mm, mesurée sous une pression de 10 kPa.

5. Procédé de fabrication d'accumulateurs selon l'une quelconque des revendications précédentes, dans lequel le matériau non tissé à microfibres de verre comprend au moins 70 % de fibres de verre dont le diamètre est inférieur à 1 µm, de 0 à 30 % de fibres de verre dont le diamètre est compris entre 1 et 12 µm et de 0 à 30 % de fibres polymères.

6. Procédé de fabrication d'accumulateurs selon l'une quelconque des revendications précédentes, dans lequel les deux couches de matériau non tissé à micro-fibres de verre sont de composition similaire en ce que concerne la répartition de la taille et de l'épaisseur des fibres.

7. Procédé de fabrication d'accumulateurs selon les revendications 1 à 5, dans lequel les deux couches de matériau non tissé à micro-fibres de verre sont de composition différente en ce qui concerne la répartition de la taille et de l'épaisseur des fibres.

8. Procédé de fabrication d'accumulateurs selon l'une quelconque des revendications précédentes, comprenant en outre l'ajout, entre les plaques, d'au moins une couche supplémentaire de matériau à microfibres de verre ayant une épaisseur comprise entre 0,5 et 2,5 mm, mesurée sous une pression de 10 kPa.

9. Procédé de fabrication d'accumulateurs selon l'une quelconque des revendications précédentes, comprenant en outre l'ajout, entre les plaques, d'au moins une couche supplémentaire de matériau polyéthylène microporeux à densité élevée comprenant de la silice en une concentration comprise entre 40 et 70 %.

10. Procédé de fabrication d'accumulateurs selon la revendication 9, dans lequel la couche de matériau polyéthylène microporeux à densité élevée a une porosité dépassant 75 %, une épaisseur comprise ente 0,13 et 0,20 mm et une taille de pore moyenne comprise entre 0,10 et 0,20 µm.
